# EUROPEAN PATENT APPLICATION

(11) **EP 2 199 953 A2**
(43) Date of publication of application: **23.06.2010**
(21) Application number: 09011769.8
(22) Date of filing: 15.09.2009
(51) Int. Cl.: G06K 17/00

(54) **Device and method for issuing RFID holding medium and computer-readable recording medium**

(30) Priority: 19.12.2008 JP 2008323389; 17.03.2009 JP 2009064154
(71) Applicant: Toshiba TEC Kabushiki Kaisha, Tokyo 141-8664 (JP)
(72) Inventor: Ochiai, Teruyuki, Tokyo 141-8864 (JP); Katsumata, Akio, Tokyo 141-8864 (JP)
(74) Representative: Kramer - Barske - Schmidtchen

(57) **Abstract**

A conveyance unit (121) conveys an RFID holding medium (102) along a guide path (113) for guiding RFID holding media and an RFID reader-writer (111) conducts radio communication to an RFID chip placed in a predetermined communication position (QP) in the guide path. A control unit (301) stops an RFID holding medium in the communication position and controls the RFID reader-writer to try first communication to the RFID chip (201). If first communication fails, the control unit conveys the RFID holding medium to the downstream side or upstream side of the guide path and controls the RFID reader-writer again to try communication to the RFID chip.

## Description

### TECHNICAL FIELD

The present invention relates to an RFID holding medium issuing device that is equipped with an RFID reader-writer and writes data to a medium having an RFID chip (RFID holding medium) and issues the medium, an RFID holding medium issuing method, and a computer-readable recording medium.

### BACKGROUND

There are conventionally RFID holding medium issuing devices that are equipped with an RFID reader-writer and write data to a medium in which an RFID chip is embedded by burring or the like (hereafter, referred to as "RFID holding medium") and issue the medium. One of the examples of such issuing devices is the tag communication device disclosed in Japanese Unexamined Patent Application Publication No. 2008-137784. The tag communication device described in this document determines success or failure of communication with an IC tag carried out in a communication conducting position on a main conveyance path to communicate with the IC tag affixed to all the forms. A form with an IC tag determined to have failed in communication affixed thereto is evacuated to a sub-conveyance path and then returned to the main conveyance path and placed in the communication conducting position again.

If its RFID chip is broken and an RFID holding medium cannot communicate with an RFID reader-writer, the medium cannot be reused anymore. For this reason, a user must remove any RFID holding medium with a broken RFID chip when he/she replenishes an RFID holding medium issuing device with media. However, the user cannot determine which RFID holding medium has a broken RFID chip by the appearance of PFID holding media. For this reason, the user will leave determination of whether or not an RFID chip is broken to the RFID holding medium issuing device.

Here, consideration will be given to radio waves used in communication with RFID chips. The output of radio waves for communication used in RFID holding medium issuing devices ought to be as small as possible to prevent influence on other equipment. To implement this in RFID holding medium issuing devices, it is required to place an RFID chip in a position where radio waves outputted from an RFID reader-writer can be received without fail. For this reason, the following will take place if an RFID holding medium is conveyed slantwise: the RFID chip gets out of a communication position and the RFID reader-writer cannot communicate with the RFID chip. If an RFID holding medium is erroneously oriented and set in the RFID holding medium issuing device, its RFID chip will get out of the communication position and the RFID reader-writer will not be able to communicate with the RFID chip.

In RFID holding medium issuing devices, as mentioned above, a sound RFID chip may be determined to have failed in communication depending on the position or orientation of the RFID holding medium. In such a case, an RFID holding medium whose RFID chip is sound and which can be reused will go to waste.

### SUMMARY

It is an object of the invention to identify an RFID holding medium having a broken RFID chip.

An illustrative embodiment of the invention is an RFID holding medium issuing device **characterized in that** comprising: a guide path for guiding an RFID holding medium having an RFID chip in a position shifted from the center to the upstream and downstream direction of conveyance; a conveyance unit for conveying the RFID holding medium in the guide path; an RFID reader-writer that conducts radio communication to an RFID chip placed in a predetermined communication position in the guide path; and a control unit for carrying out first processing to try communication by the RFID reader-writer in a position where the RFID chip of the RFID holding medium whose front end is set in the desired direction is located in the communication position, and, if communication in the first processing fails, for carrying out second processing to place the RFID holding medium in a position where the RFID chip of the RFID holding medium whose front end is oppositely set to the desired direction is located in the communication position and try communication by the RFID reader-writer.

Another illustrative embodiment of the invention is an RFID holding medium issuing method **characterized in that** comprising: conveying an RFID holding medium having an RFID chip in a position shifted from the center to the upstream and downstream direction of conveyance along a guide path for guiding the RFID holding medium; trying first communication by the RFID reader-writer in a position where the RFID chip of the RFID holding medium whose front end is set in the desired direction is located in the communication position; and, placing the RFID holding medium, if communication in the first processing fails, in a position where the RFID chip of the RFID holding medium whose front end is oppositely set to the desired direction is located in the communication position and trying second communication by the RFID reader-writer.

Another illustrative embodiment of the invention is a computer-readable medium having computer programs stored thereon that, when executed by a computer, causes the computer to: control a conveyance unit for conveying the RFID holding medium so that an RFID holding medium having an RFID chip in a position shifted from the center to the upstream and downstream direction of conveyance is conveyed along a guide path for guiding the RFID holding medium; try first communication by the RFID reader-writer in a position where the RFID chip of the RFID holding medium whose front end is set in the desired direction is located in the communication position; and place the RFID holding medium, when communication in the first processing fails, in a position where the RFID chip of the RFID holding medium whose front end is oppositely set to the desired direction is located in the communication position and try second communication by the RFID reader-writer.

### DESCRIPTION OF THE DRAWINGS

A more complete appreciation of the present invention and many of the attendant advantages thereof will be readily obtained as the same becomes better understood by reference to the following detailed description when considered in connection with the accompanying drawings, wherein:
FIG. 1 is an external perspective view of an RFID single-cut sheet printer in an embodiment;
FIG. 2 is a plan view of a rewritable single-cut sheet;
FIG. 3 is a schematic side view illustrating the internal structure of an RFID single-cut sheet printer;
FIG. 4 is a block diagram illustrating the electrical configuration of an RFID single-cut sheet printer;
FIG. 5 is a flowchart illustrating the flow of sheet size input processing carried out in an RFID single-cut sheet printer;
FIG. 6 is a flowchart illustrating the flow of print processing carried out in an RFID single-cut sheet printer;
FIG. 7(A) is an explanatory drawing illustrating the movement of a properly set rewritable single-cut sheet on a guide path;
FIG, 7(B) is an explanatory drawing illustrating the movement of an oppositely set rewritable single-cut sheet on a guide path;
FIG. 7(C) is an explanatory drawing illustrating the movement of an oppositely set rewritable single-cut sheet on a guide path;
FIG. 8 is a plan view of a rewritable single-cut sheet in another embodiment;
FIG. 9 is a flowchart illustrating the flow of print processing carried out in an RFID single-cut sheet printer;
FIG. 10(A) is an explanatory drawing illustrating the movement of a properly set rewritable single-cut sheet on a guide path;
FIG. 10(B) is an explanatory drawing illustrating the movement of an oppositely set rewritable single-cut sheet on a guide path;
FIG. 10(C) is an explanatory drawing illustrating the movement of an oppositely set rewritable single-cut sheet on a guide path;
FIG. 11 is a flowchart illustrating the flow of print processing carried out in an RFID single-cut sheet printer in another embodiment;
FIG. 12 is a schematic diagram illustrating an example of the printout contents printed on a rewritable single-cut sheet having a broken RFID chip;
FIG. 13(A) is an explanatory drawing illustrating the general outline of an RFID single-cut sheet printer in another embodiment and showing an example of printing in which rewritable single-cut sheets are all set in proper orientation;
FIG. 13(B) is an explanatory drawing illustrating an example of printing in which only one of rewritable single-cut sheets is oppositely set;
FIG. 13(C) is an explanatory drawing illustrating an example of printing in which only one of rewritable single-cut sheets is oppositely set and the print on it is corrected; and
FIG. 14 is a flowchart illustrating the flow of print processing carried out in an RFID single-cut sheet printer.

### DETAILED DESCRIPTION

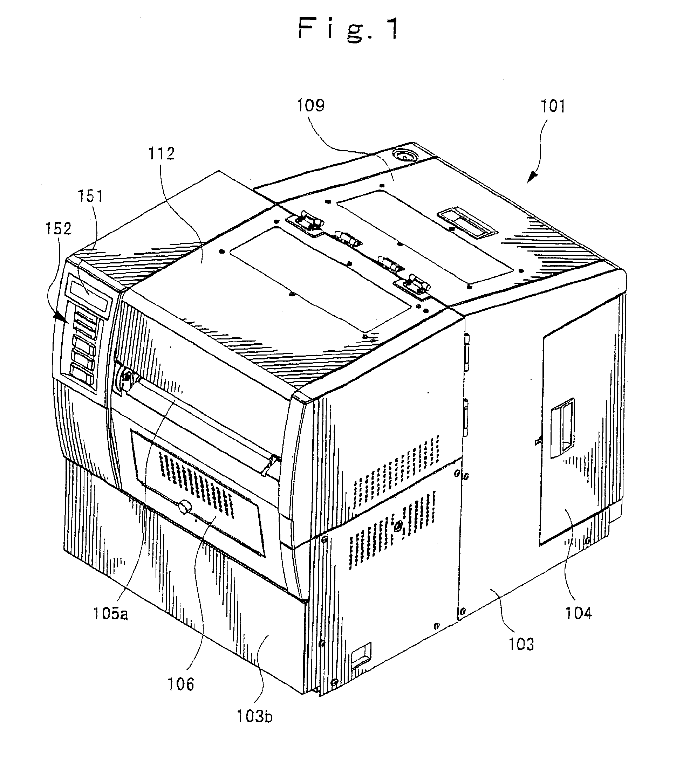

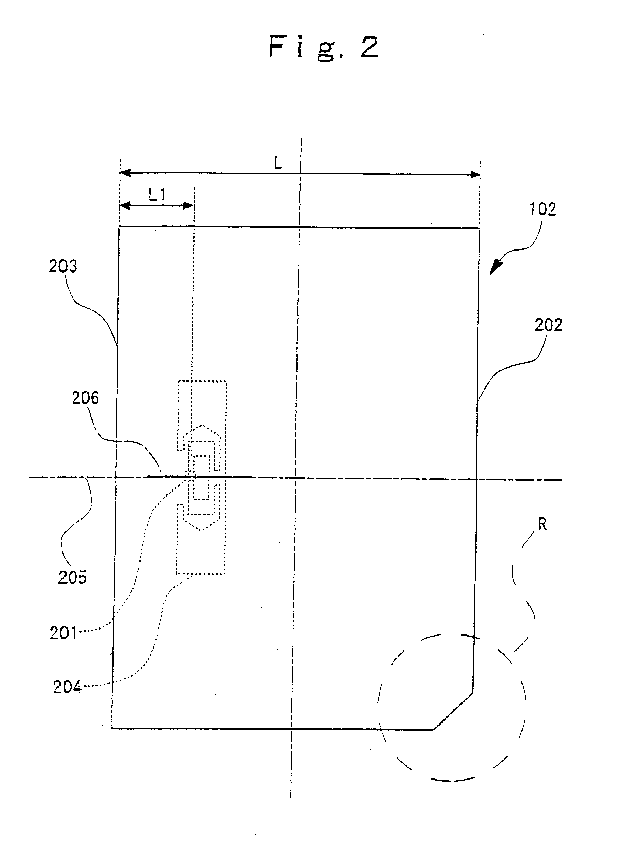

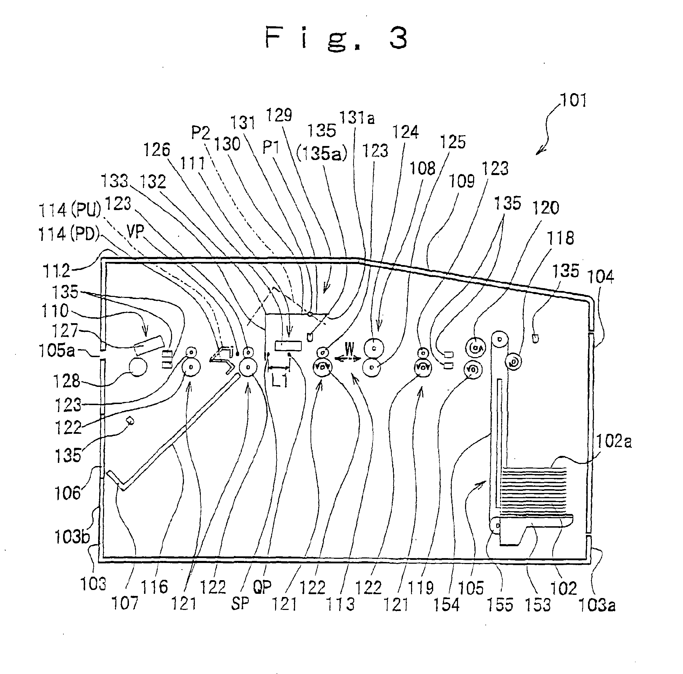

Description will be given to an embodiment of the invention with reference to FIG. 1 to FIGS. 7 (A) to 7(C). The RFID holding medium issuing device described in relation to this embodiment is an RFID single-cut sheet printer 101. This RFID single-cut sheet printer 101 carries out printing on a rewritable single-cut sheet 102 (Refer to FIG. 2 and FIG. 3) and issues the sheet. In the rewritable single-cut sheet 102, printout contents can be printed and erased according to a difference in temperature caused by applied heat. The RFID single-cut sheet printer 101 not only carries out printing on the rewritable single-cut sheet 102 but also erases already printed printout contents. The rewritable single-cut sheet 102 has an RFTD chip 201 (Refer to FIG. 2) buried therein. The RFID single-cut sheet printer 101 also writes data to the RFID chip 201 in the rewritable single-cut sheet 102. In this embodiment, the RFID holding medium is a rewritable single-cut sheet 102.

FIG. 1 is an external perspective view of the RFID single-cut sheet printer 101. The RFID single-cut sheet printer 101 has a housing 103. The housing 103 is in the shape of a substantially rectangular parallelepiped box and is rectangular as viewed in a plane. A media feed unit cover 104 is connected to one side face (first side face 103a) of the housing 103 in the direction of short sides so that the cover can be freely opened and closed. (The first side face is not shown in FIG. 1. Refer to FIG. 3 for this side face.) A user can replenish the media feed unit 105 (Refer to FIG. 3) provided in the housing 103 with rewritable single-cut sheets 102 by opening the media feed unit cover 104.

The housing 103 has a media delivery port 105a in the other side face (second side face 103b) in the direction of short sides on the opposite side to the first side face 103a. The RFID single-cut sheet printer 101 delivers a printed rewritable single-cut sheet 102 with data written from this media delivery port 105a. The second side face 103b is connected with a reject collection unit cover 106. A user can take a rewritable single-cut sheet 102 out of a reject collection unit 107 (Refer to FIG. 3) provided in the housing 103 by opening this reject collection unit cover 106, In this reject collection unit 107, rewritable single-cut sheets 102 having a broken RFID chip 201 are collected. The second side face 103b is also provided with a liquid crystal display 151 and an operation panel 152.

The upper face of the housing 103 is provided with two covers so that they can be both freely opened upward and closed. One of the covers is an upstream cover 109 for a user to access an erasing unit 108 (Refer to FIG. 3). The other is a downstream cover 112 for a user to access a printing unit 110 (Refer to FIG. 3) and an RFID reader-writer 111 (Refer to FIG. 3). The upstream cover 109 is provided closer to the downstream cover 112 than the media feed unit cover 104 is. The downstream cover 112 forms the media delivery port 105a together with the housing 103,

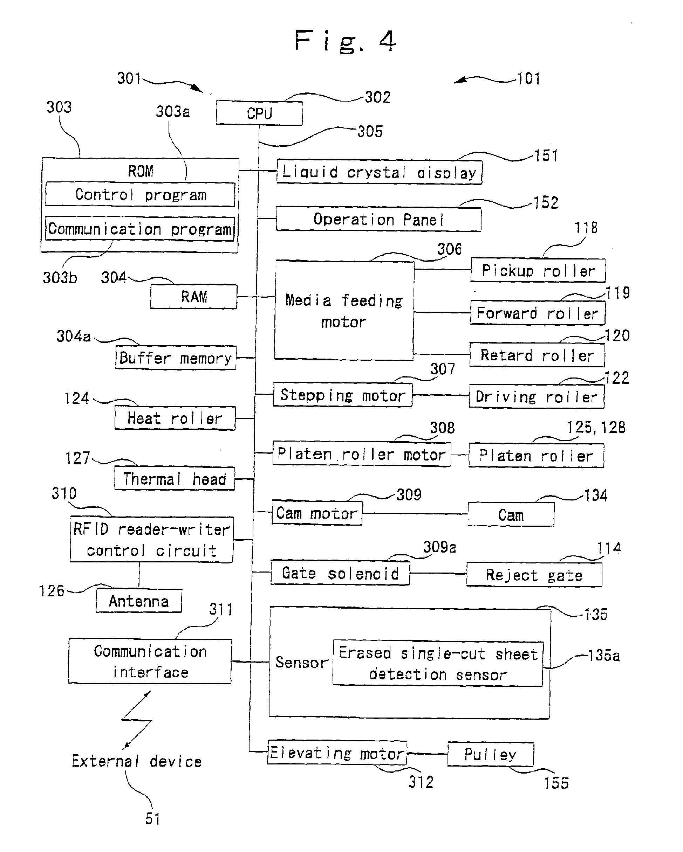

The RFID single-cut sheet printer 101 in this embodiment is connected to an external device 51 so that data can be freely communicated between them. (Refer to FIG. 4 for the external device, which is not shown in FIG. 1.) When it receives print data transmitted from the external device, the RFID single-cut sheet printer 101 applies heat to a rewritable single-cut sheet 102 stored in the media feed unit 105 to erase printout contents. Thereafter it carries out printing based on the received print data. Print data transmitted from the external device includes write data to be written to the RFID chip 201 (Refer to FIG. 2) buried in the rewritable single-cut sheet 102.

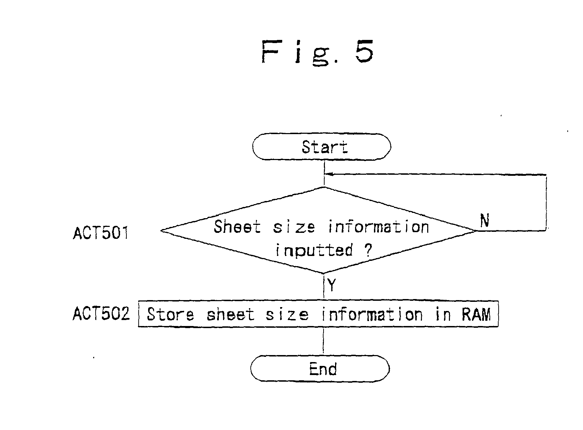

FIG. 2 is a plan view of the rewritable single-cut sheet 102. On the surface of the rewritable single-cut sheet 102, there is formed a reversible thermosensitive recording layer containing leuco dye, developer, and the like. The reversible thermosensitive recording layer has such a property that printout contents are fixed by rapid cooling after heating and printout contents are erased by slow cooling after heating. The rewritable single-cut sheet 102 is substantially rectangular. L will be taken as the length of the short sides of the rewritable single-cut sheet 102. This length of L is inputted to a microcomputer 301 (Refer to FIG. 4) provided in the RFID single-cut sheet printer 101 by sheet size input processing (Refer to FIG. 5).

The chamfered corner area R of the rewritable single-cut sheet 102 illustrated in FIG. 2 has a shape obtained by obliquely cutting the sheet so that the following is implemented: the chamfered corner area R is at an angle of 45 degrees to either of two equal sides forming an isosceles triangle together therewith. When a rewritable single-cut sheet 102 is stored in the media feed unit 105 of the RFID single-cut sheet printer 101, one long side (first long side 202) thereof adjoining to the chamfered corner area R faces to the first side face 103a. At this time, the chamfered corner area R serves as a mark for a user to set the sheet in the media feed unit 105 with its first long side 202 facing to the first side face 103a.

The rewritable single-cut sheet 102 has the RFID chip 201 buried therein. The RFID chip 201 is positioned on an imaginary center line 205 of the rewritable single-cut sheet 102 extended in the direction of short sides so that it is close to the other long side (second long side 203) of the rewritable single-cut sheet 102. For this reason, when the rewritable single-cut sheet 102 is set in the media feed unit 105, the following takes place: the RFID chip 201 is positioned by a distance of L1 upstream of the second long side 203 that forms the end of the sheet positioned downstream (Refer to FIG. 3) of the guide path 113. However, the distance of L1 is smaller than half of the length of the RFID chip 201 in the direction of short sides. That is, the distance of L1 < L/2.

The RFID chip 201 is connected to a metal plate 204. The metal plate 204 is in the shape of a long and thin rectangle. The shape of the metal plate 204 is symmetric with respect to the imaginary center line 206 of the metal plate 204 extended in the direction of its short sides. The RFID chip 201 is positioned on the imaginary center line 206 of the metal plate 204. The metal plate 204 is so oriented that its long sides are parallel with the long sides of the RFID chip 201. The imaginary center line 206 of the metal plate 204 is matched with the imaginary center line 205 of the RFID chip 201. The RFID chip 201 is started by electromotive force arising from radio waves outputted from the antenna 126 (Refer to FIG. 3) of the RFID reader-writer 111 and received by the metal plate 204. That is, the metal plate 204 functions as an antenna in RFID communication.

FIG. 3 is a schematic side view illustrating the internal structure of the RFID single-cut sheet printer 101. In the housing 103, a guide path 113 extending from the media feed unit 105 to the media delivery port 105a is formed. The guide path 113 is formed mainly of multiple roller pairs 121. The roller pairs 121 are disposed at appropriate intervals so that the media feed unit 105 and the media delivery port 105a communicate with each other in the housing 103. The area of the guide path 113 on the media feed unit 105 side will be designated as upstream side. The area of the guide path 113 on the media delivery port 105a side will be designated as downstream side.

In the guide path 113, the erasing unit 108, RFID reader-writer 111, and printing unit 110 are disposed in this order from upstream. The reject collection unit 107 is disposed under the printing unit 110 in the housing 103.

The RFID single-cut sheet printer 101 has various sensors 135 in the housing 103. Of the sensors 135, an erased single-cut sheet detection sensor 135a is positioned in proximity to the RFID reader-writer 111 upstream thereof. The erased single-cut sheet detection sensor 135a is reflective. The erased single-cut sheet detection sensor 135a outputs detection light toward the guide path 113 and receives the detection light reflected by a rewritable single-cut sheet 102 conveyed on the guide path 113. The microcomputer 301 (Refer to FIG. 4) determines whether or not a rewritable single-cut sheet 102 is present on the guide path 113 based on an electrical signal outputted by the erased single-cut sheet detection sensor 135a. The sensors 135, including the erased single-cut sheet detection sensor 135a, may be reflective or may be transmissive and equipped with an output unit for outputting detection light and a light reception unit for receiving the detection light. In the latter case, the output unit and the light reception unit are so disposed that an area through which rewritable single-cut sheets 102 are passed is sandwiched between them.

The guide path 113 is provided in the position VP of bifurcation between the RFID reader-writer 111 and the printing unit 110 with a reject gate 114 as a switching unit. The reject gate 114 is basically a flat plate parallel with the guide path 113 and is in such a shape that its upstream portion is bent downward toward the downstream side. The reject gate 114 is so disposed that its upstream portion is displaced up and down. For this reason, it is brought into either upward oriented state PU or downward oriented state PD. When the reject gate 114 is brought into the downward oriented state PD (indicated by solid line in FIG. 3), the reject gate 114 supports a rewritable single-cut sheet 102 conveyed from the RFID reader-writer 111 to send the rewritable single-cut sheet 102 to the printing unit 110. When the reject gate 114 is brought into the upward oriented state PU (indicated by alternate long and short dash line in FIG. 3), a rewritable single-cut sheet 102 conveyed from the RFID reader-writer 111 drops and is stored in the reject collection unit 107. Between the reject gate 114 and the reject collection unit 107, a slope 116 as a reject path is disposed. A dropped rewritable single-cut sheet 102 slides on the slope 116 and arrives at the reject collection unit 107.

Rewritable single-cut sheets 102 are set beforehand in the media feed unit 105. The media feed unit 105 has a placement stage 153. The placement stage 153 is used to place rewritable single-cut sheets 102 thereon. The placement stage 153 is connected to an up-and-down belt 154. The up-and-down belt 154 is stretched between two pulleys 155. The pulleys 155 are rotated by driving of an elevating motor 312 (Refer to FIG. 4). The up-and-down belt 154 is fed according to the rotation of the pulleys 155 and the placement stage 153 is thereby moved up and down.

Above the media feed unit 105, a pickup roller 118 is disposed. The pickup roller 118 sends the uppermost rewritable single-cut sheet 102a positioned uppermost among the rewritable single-cut sheets 102 set in the media feed unit 105 to the downstream side of the guide path 113. A forward roller 119 and a retard roller 120 are disposed downstream of the pickup roller 118 in the guide path 113. The forward roller 119 and the retard roller 120 are so disposed that they sandwich the guide path 113 between them. The forward roller 119 is disposed under the guide path 113. The forward roller 119 is rotated in such a direction that the rewritable single-cut sheet 102 (the uppermost rewritable single-cut sheet 102a) sent out from the media feed unit 105 is pushed to the downstream side of the guide path 113. The retard roller 120 is disposed above the guide path 113. The retard roller 120 is rotated in such a direction that any rewritable single-cut sheet 102 sticking to the lower face of the uppermost rewritable single-cut sheet 102a and sent out to the guide path 113 is pushed back to the media feed unit 105.

The individual roller pairs 121 are appropriately disposed between the roller pair comprised of the forward roller 119 and the retard roller 120, erasing unit 108, RFID reader-writer 111, printing unit 110, and the media delivery port 105a. Every roller pair 121 includes a driving roller 122 and a driven roller 123. Each driving roller 122 and the corresponding driven roller 123 sandwich the guide path 113 between them. The driving rollers 122 are disposed under the guide path 113. The driven rollers 123 are disposed above the guide path 113. Each driving roller 122 is so provided that the following is implemented: it can be freely rotated in such a direction that a rewritable single-cut sheet 102 on the guide path 113 is sent to the downstream side and in such a direction that it is sent to the upstream side. (The direction in which a rewritable single-cut sheet is sent to the downstream side corresponds to counterclockwise direction in FIG. 3. This direction will be hereafter referred to as "forward direction.") (The direction in which a rewritable single-cut sheet is sent to the upstream side corresponds to clockwise direction in FIG. 3. This direction will be hereafter referred to as "backward direction,") Each driven roller 123 is disposed with play (allowance) in the housing 103 so that it can be moved up or down according to the thickness of a rewritable single-cut sheet 102 conveyed on the guide path 113. Each roller pair 121 is so disposed that the following is implemented: the driving roller 122 is rotated in the forward direction or the backward direction; and a rewritable single-cut sheet 102 sandwiched between the driving roller 122 and the driven roller 123 is conveyed to the downstream side or upstream side of the guide path 113 along the direction W of conveyance by the driving roller 122. That is, each roller pair 121 functions as a conveyance unit.

The erasing unit 108 has a heat roller 124 and a platen roller 125. The heat roller 124 applies thermal energy required for erasing printout contents to a rewritable single-cut sheet 102 according to the properties of the rewritable single-cut sheet 102. After thermal energy is applied, the rewritable single-cut sheet 102 is slowly cooled. As a result, the printout contents are erased from the rewritable single-cut sheet 102. The platen roller 125 is rotated in the forward direction, and supports a rewritable single-cut sheet 102 receiving the application of thermal energy from the heat roller 124 and sends it to the downstream side of the guide path 113.

The RFID reader-writer 111 has the antenna 126. The antenna 126 outputs radio waves in the UHF band downward and thereby conducts short range radio communication with the RFID chip 201 (Refer to FIG. 2) in each rewritable single-cut sheet 102. This antenna 126 is disposed between the erasing unit 108 and the printing unit 110 above the guide path 113. The thus located antenna 126 conducts short range radio communication with an RFID chip 201 placed in a predetermined communication position QP between the erasing unit 108 and the printing unit 110.

The printing unit 110 has a thermal head 127 and a platen roller 128. The thermal head 127 has a heating element (not shown). From the heating element, thermal energy is applied to a rewritable single-cut sheet 102 on the guide path 113. This thermal energy heats the rewritable single-cut sheet 102 to a temperature higher than heating temperature for erasing. After the application of thermal energy, the rewritable single-cut sheet 102 is rapidly cooled. As a result, printing is carried out on the rewritable single-cut sheet 102 conveyed on the guide path 113. The platen roller 128 is rotated in the forward direction, and supports a rewritable single-cut sheet 102 receiving the application of thermal energy from the thermal head 127 and sends it toward the media delivery port 105a.

A stopper 129 is disposed above the antenna 126 in the housing 103. The stopper 129 has a base portion 130 extended in parallel with the guide path 113. The base portion 130 is provided at both side thereof relative to the guide path 113 with a supported portion 131 rotatably supported so that the downstream end 132 of the base portion 130 can be moved up and down. The downstream end 132 of the base portion 130 is fixedly connected with a drooping portion 133 extended downward. For this reason, the stopper 129 is in L shape as viewed from a side face of the PFID single-cut sheet printer 101.

The downstream end 132 of the stopper 129 is pulled upward by a spring (not shown) and brought into a second position P2 (indicated by alternate long and short dash line in FIG. 3). For this reason, the drooping portion 133 is normally positioned upward. That is, the stopper 129 is located in the second position P2 where it does not interfere with a conveyed rewritable single-cut sheet 102.

A vertically rising and sinking cam 134 (Refer to FIG. 4) is abutted against the lower face 131a of the portion of the base portion 130 positioned upstream of its supported portion 131 with respect to the guide path 113. When the cam 134 is protruded upward, the portion of the base portion positioned on the upstream side of the guide path 113 is pushed up and brought into a first position P1 (indicated by solid line in FIG. 3). As a result, the drooping portion 133 is displaced downward. When the cam 134 is sunken downward, the stopper 129 is returned to the second position P2 by the tension of the spring and the drooping portion 133 is displaced upward.

When the stopper 129 is moved down and brought into the first position P1, the drooping portion 133 is placed in a stop position SP in the guide path 113. This stop position SP corresponds to a position downstream of the above-mentioned communication position QP by the distance of L1 (Refer to FIG. 2) with respect to the guide path 113. When the stopper 129 is moved down and brought into the first position P1, the downstream end (second long side 203 (Refer to FIG. 2)) of a rewritable single-cut sheet 102 conveyed along the guide path 113 hits against the drooping portion 133. As a result, the rewritable single-cut sheet 102 is stopped. It is important here that the following takes place when a rewritable single-cut sheet 102 is stopped by the stopper 129 as mentioned above: the RFID chip 201 in the rewritable single-cut sheet 102 is located in the communication position QP and it can receive radio waves outputted from the antenna 126; and as a result, short range radio communication with the RFID reader-writer 111 can be reliably conducted.

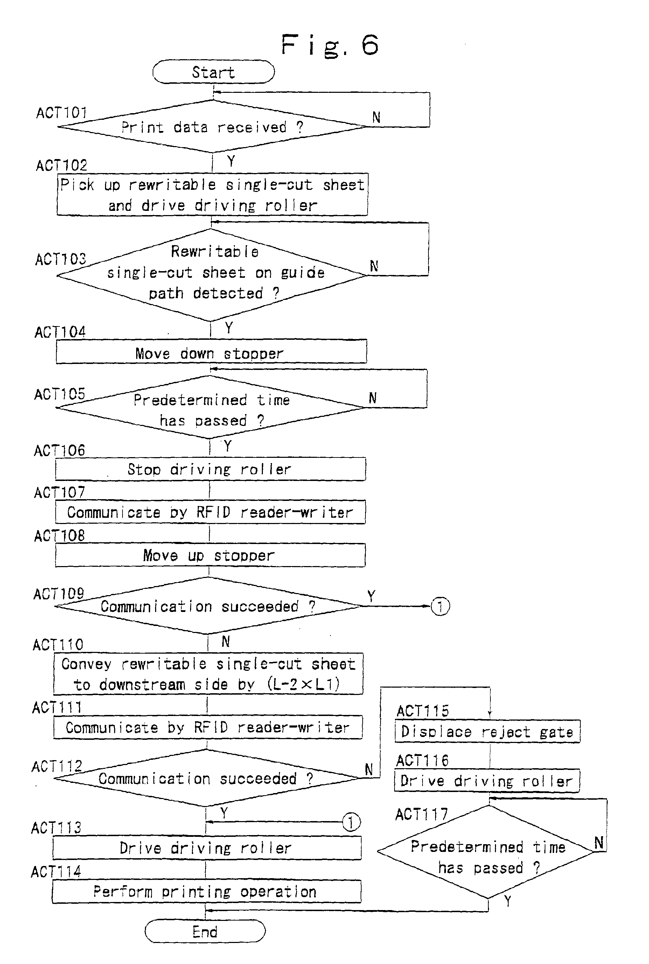

FIG. 4 is a block diagram illustrating the electrical configuration of the RFID single-cut sheet printer 101. The RFID single-cut sheet printer 101 includes the microcomputer 301 as a control unit. The microcomputer 301 has CPU 302, ROM 303, and RAM 304. The CPU 302 carries out arithmetic processing. In the ROM 303, data is fixedly stored, In the RAM 304, data is rewritably stored. This RAM 304 functions as a working memory for arithmetic processing carried out by the CPU 302. The ROM 303 stores various programs including: a control program 303a for implementing sheet size input processing (Refer to FIG. 5) and print processing (Refer to FIG. 6) and a communication program 303b for implementing data communication with an external device 51 connected to the RFID single-cut sheet printer 101. The CPU 302 executes various programs stored in the ROM 303 when the RFID single-cut sheet printer 101 is in operation.

The microcomputer 301 is connected to a buffer memory 304a through a bus line 305. The buffer memory 304a temporarily stores print data transmitted from the connected external device 51 to a rewritable single-cut sheet 102.

The microcomputer 301 is connected to the following through the bus line 305 and various input/output circuits (not shown): a media feeding motor 306, a stepping motor 307, a platen roller motor 308, a cam motor 309 as a driving source for the stopper, a gate solenoid 309a, the sensors 135, the elevating motor 312, the heat roller 124, and the thermal head 127.

The media feeding motor 306 is connected to the pickup roller 118, forward roller 119, and retard roller 120 through a gear train (not shown). The media feeding motor 306 rotates the pickup roller 118, forward roller 119, and retard roller 120 under the control of the microcomputer 301.

The stepping motor 307 can be rotated both in the forward direction and in the backward direction. This stepping motor 307 is connected to the driving roller 122 through a gear train (not shown). The stepping motor 307 drives by any number of steps in either of the forward direction and the backward direction under the control of the microcomputer 301 and rotates the driving roller 122. As a result, a rewritable single-cut sheet 102 on the guide path 113 is moved in the forward direction or the backward direction by a distance corresponding to the number of steps of the stepping motor 307.

The platen roller motor 308 is connected to the platen rollers 125, 128 through a gear train (not shown). The platen roller motor 308 rotates the platen rollers 125, 128 under the control of the microcomputer 301.

The cam motor 309 is connected to the cam 134 thorough a power transmission mechanism (not shown). The cam motor 309 moves the cam 134 under the control of the microcomputer 301. As a result, the cam 134 moves the stopper 129 between the first position P1 and the second position P2 and vertically displaces the drooping portion 133 (Refer to FIG. 3).

When energized, the gate solenoid 309a lifts the reject gate 114 to bring it into the upward oriented state PU. When the gate solenoid 309a is deenergized, the reject gate 114 is displaced downward by its own weight. The gate solenoid 309a brings the reject gate 114 into either of the upward oriented state PU and the downward oriented state PD under the control of the microcomputer 301.

The elevating motor 312 is rotated both in the forward direction and in the backward direction. The elevating motor 312 rotates the pulleys 155 under the control of the microcomputer 301 and thereby moves up and down rewritable single-cut sheets 102 set in the media feed unit 105.

The heat roller 124 heats a rewritable single-cut sheet 102 to a temperature of such a level that the printout contents thereon are erased under the control of the microcomputer 301. The thermal head 127 drives and causes the heating element (not shown) to produce heat based on print data stored in the buffer memory 304a under the control of the microcomputer 301. A rewritable single-cut sheet 102 is heated to a temperature of such a level that color is produced and printing is carried out and thus printing is carried out based on print data.

The microcomputer 301 is connected to an RFID reader-writer control circuit 310 through the bus line 305. The RFID reader-writer control circuit 310 is connected to the antenna 126. The RFID reader-writer control circuit 310 outputs radio waves from the antenna 126 under the control of the microcomputer 301 and writes write data contained in print data stored in the buffer memory 304a to an RFID chip 201. The RFID reader-writer control circuit 310 also outputs information to the CPU 302 based on radio waves from the RFID chip 201 received by the antenna 126 under the control of the microcomputer 301.

The microcomputer 301 is connected to a communication interface 311 through the bus line 305. Data communication between the RFID single-cut sheet printer 101 and the external device 51 connected to the RFID single-cut sheet printer 101 is implemented by the communication interface 311.

FIG. 5 is a flowchart illustrating the flow of sheet size input processing carried out in the RFID single-cut sheet printer 101. When the RFID single-cut sheet printer 101 is started, the microcomputer 301 carries out processing in accordance with the contents of a control program 303a in the ROM 303. Then it waits for input of information on the sheet size of rewritable single-cut sheets 102 set in the media feed unit 105 from the operation panel 152 (ACT501). The sheet size information contains information on the value of L, or the length of the short sides of each rewritable single-cut sheet 102. When it is determined that sheet size information has been inputted (Y at ACT501), the microcomputer 301 stores the inputted sheet size information in the RAM 304 (ACT502) and terminates this series of processing.

FIG. 6 is a flowchart illustrating the flow of print processing carried out in the RFID single-cut sheet printer 101. When the RFID single-cut sheet printer 101 is started, the microcomputer 301 carries out processing in accordance with the contents of a control program 303a stored in the ROM 303. Then it determines whether or not print data transmitted from the external device 51 has been received (ACT101) . When it is determined that print data has been received (Y at ACT101), the microcomputer 301 starts print processing. This print processing is carried out on condition that the following should be implemented in the RFID single-cut sheet printer 101: the stopper 129 should be in the second position P2 and positioned upward and the reject gate 114 should be moved down. At this time, it is assumed that the RAM 304 holds sheet size information on rewritable single-cut sheets 102 inputted through the sheet size input processing (Refer to FIG. 5).

When it starts print processing, the microcomputer 301 controls the media feeding motor 306 to pick up a rewritable single-cut sheet 102 loaded in the media feed unit 105. Further, it controls the stepping motor 307 to rotate the driving roller 122 to convey the rewritable single-cut sheet 102, sent out to the guide path 113, to the downstream side (ACT102). At this time, the microcomputer 301 stores the received print data in the buffer memory 304a. The rewritable single-cut sheet 102 is conveyed to the downstream side of the guide path 113. The rewritable single-cut sheet 102 passes through the erasing unit 108 before it is detected by the erased single-cut sheet detection sensor 135a (ACT103). The printout contents already printed on the rewritable single-cut sheet 102 are erased by the heat roller 124 of the erasing unit 108.

When the rewritable single-cut sheet 102 with its printout contents erased is detected by an electrical signal outputted by the erased single-cut sheet detection sensor 135a (Y at ACT103), the microcomputer 301 carries out the following processing: it controls the cam motor 309 to move the cam 134 and move down the stopper 129 (ACT104). When a predetermined time has passed (Y at ACT105), the microcomputer 301 stops driving of the stepping motor 307 to stop the rotation of the driving roller 122 (ACT106). The predetermined time at ACT105 refers to a time sufficient for the following to occur: the rewritable single-cut sheet 102 detected by the erased single-cut sheet detection sensor 135a is continuously conveyed to the downstream side; and the second long side 203 (Refer to FIG. 2), or the end of the rewritable single-cut sheet 102 on the downstream side hits against the drooping portion 133 of the stopper 129 and skew of the rewritable single-cut sheet 102 is corrected. That is, in the RFID single-cut sheet printer 101, the following is implemented by the processing of ACT103 to ACT106: the stopper 129 is moved; and the rewritable single-cut sheet 102 is stopped on the guide path 113 with the end (second long side 203) of the rewritable single-cut sheet 102 on the downstream side located in the stop position SP in the guide path 113.

Following ACT106, the microcomputer 301 controls the RFID reader-writer control circuit 310 to output radio waves for writing write data contained in the print data stored in the buffer memory 304a to the RFID chip 201 from the antenna 126 (ACT107).

Subsequently, the microcomputer 301 controls the cam motor 309 to move the cam 134 and move up the stopper 129 (ACT108) and determines whether or not the communication conducted at ACT107 has succeeded (ACT109). When it is determined at ACT109 that a radio wave signal outputted from the RFID chip 201 as the destination of communication has been received by the antenna 126, the microcomputer 301 determines that the communication has succeeded. When it is determined that the communication has succeeded (Y at ACT109), the flow of processing proceeds to ACT113 (described later), When it is determined that the communication has not succeeded (N at ACT109), the microcomputer controls the stepping motor 307 to convey the rewritable single-cut sheet 102 to the downstream side of the guide path 113 by a distance of (L - 2 x L1) (ACT110). Then it controls the RFID reader-writer control circuit 310 again to output radio waves from the antenna 126 (ACT111). This value of L is stored beforehand in the RAM 304 through the sheet size input processing (Refer to FIG. 5) . The processing carried out at ACT111 is the same as the processing carried out at ACT107.

Subsequently, the microcomputer 301 determines whether or not the communication conducted at ACT111 has succeeded (ACT112). When it is determined at ACT112 that the communication has succeeded (Y at ACT112), the microcomputer carries out the following processing: it controls the stepping motor 307 to rotate the driving roller 122 so as to convey the rewritable single-cut sheet 102 to the downstream side of the guide path 113 (ACT113); and it controls the thermal head 127 of the printing unit 110 to carry out printing on the rewritable single-cut sheet 102 being conveyed (ACT114). Then it terminates this series of processing. The processing of ACT113 and the processing of ACT114 are also carried out when it is determined that the communication at ACT107 has succeeded (Y at ACT109).

When it is determined at ACT112 that the communication has not succeeded (N at ACT112), the microcomputer 301 controls the gate solenoid 309a to displace the reject cate 114 and bring it into the upward oriented state PU (ACT115). Subsequently, the microcomputer 301 controls the stepping motor 307 to rotate the driving roller 122 so that the rewritable single-cut sheet 102 is conveyed to the downstream side of the guide path 113 (ACT116). When a predetermined time has passed (Y at ACT117), the microcomputer terminates this series of processing. The predetermined time at ACT117 refers to a time sufficient for the following to occur: the rewritable single-cut sheet 102 is conveyed to the downstream side of the guide path 113 and placed in the position where the reject gate 114 is located; and it drops by its own weight and slides down on the slope 116.

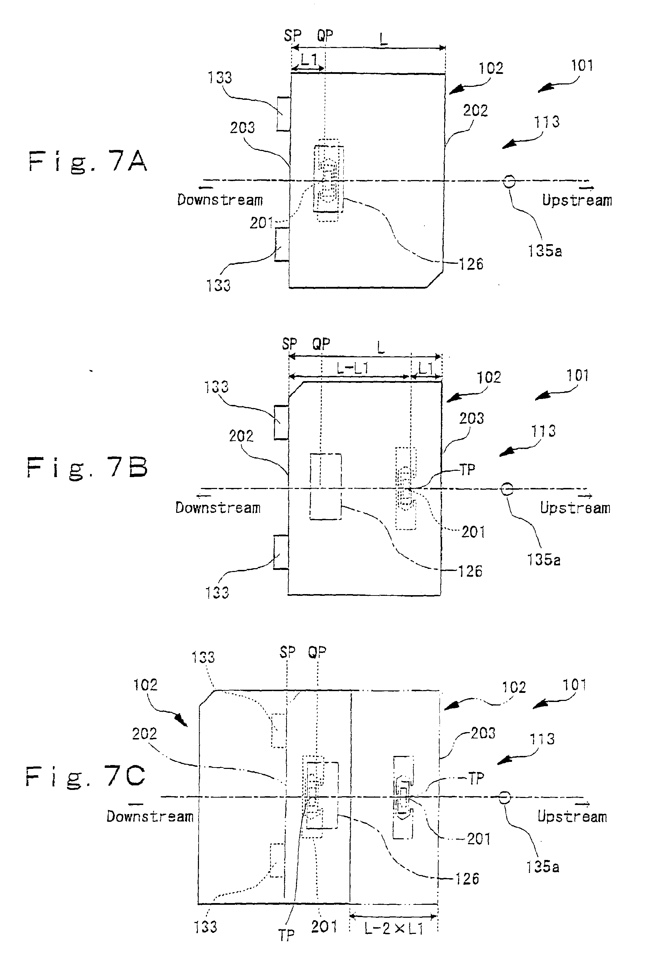

FIGS. 7(A) to 7(C) are explanatory drawings illustrating the movement of a rewritable single-cut sheet 102 on the guide path 113. When the RFID single-cut sheet printer 101 in this embodiment that performs the above-mentioned operation receives print data transmitted from the external device 51 (Refer to FIG. 4), the following takes place: the pickup roller 118 picks up a rewritable single-cut sheet 102 in the media feed unit 105 (Refer to FIG. 3) and sends it out to the guide path 113. During conveyance, the rewritable single-cut sheet 102 passes through the erasing unit 108. When the rewritable single-cut sheet 102 passes through the erasing unit 108, its printout contents are erased. In the RFID single-cut sheet printer 101 in this embodiment, therefore, not only rewritable single-cut sheets 102 with nothing printed thereon but also rewritable single-cut sheets 102 with something printed thereon can be set.

After the passage through the erasing unit 108, the rewritable single-cut sheet 102 is further conveyed to the downstream side of the guide path 113 and is detected by the erased single-cut sheet detection sensor 135a. This detection moves down the stopper 129 (Refer to FIG. 3). As a result, the drooping portion 133 of the stopper 129 stops the rewritable single-cut sheet 102 with the second long side 203, or the downstream end of the rewritable single-cut sheet 102, located in the stop position SP in the guide path 113. For this reason, if a rewritable single-cut sheet 102 is skewed and conveyed on the guide path 113, the downstream end of the rewritable single-cut sheet 102 hits against the drooping portion 133 and the skew is corrected. At this time, the rewritable single-cut sheet 102 is continuously conveyed to the downstream side by the driving rollers 122 (not shown in FIGS. 7(A) to 7(C)). The driven rollers 123 (not shown in FIGS. 7(A) to 7(C)) opposed to the respective driving rollers 122 are provided with play in the vertical direction. When skew of a rewritable single-cut sheet 102 is corrected, the rewritable single-cut sheet 102 is bent by its own elasticity. For this reason, the rewritable single-cut sheet 102 can float up and the occurrence of a jam in the guide path 113 is prevented by the rewritable single-cut sheet 102 being stopped by the drooping portion 133.

Since skew of the rewritable single-cut sheet 102 is corrected, the RFID chip 201 buried in the rewritable single-cut sheet 102 is placed in the communication position QP where it can receive radio waves from the antenna 126 (FIG. 7(A)). This is because the following distances are both L1: the distance between the stop position SP and the communication position QP in the guide path 113 and the distance between the second long side 203 and the RFID chip 201 in the rewritable single-cut sheet 102 in the direction of short sides. In the RFID single-cut sheet printer 101 in this embodiment, communication by the RFID reader-writer 111 is conducted with skew of the rewritable single-cut sheet 102 corrected by the stopper 129 as mentioned above. Therefore, an error in communication to the RFID chip due to skew of the rewritable single-cut sheet 102 does not occur.

Consideration will be given to a case where a rewritable single-cut sheet 102 is set in the media feed unit 105 with its second long side 203 facing upstream and its first long side 202 facing downstream (FIG. 7(B)). In this case, the following takes place even when the stopper 129 goes down and the rewritable single-cut sheet 102 is stopped by the drooping portion 133: the RFID chip 201 is not located in the communication position QP but it is placed in a position shifted upstream from the stop position SP by a distance of (L - L1). This position will be designated as chip candidate position TP in the rewritable single-cut sheet 102. If communication by the RFID reader-writer 111 fails, the following processing is carried out in the RFID single-cut sheet printer 101 in this embodiment: the rewritable single-cut sheet 102 is conveyed to the downstream side of the guide path 113 by a distance of (L - 2 × L1) (FIG. 7(C)). As the result of this conveying operation, the chip candidate position TP in the rewritable single-cut sheet 102 is located in the communication position QP in the guide path 113. In this state, communication by the RFID reader-writer 111 is conducted again in the RFID single-cut sheet printer 101. For this reason, the following does not occur in the RFID single-cut sheet printer 101 in this embodiment: an error in communication to the RFID chip 201 due to a rewritable single-cut sheet 102 being replenished in an erroneous orientation to the media feed unit 105.

If communication to an RFID chip 201 by the RFID reader-writer 111 fails despite the above conveying operation and write operation, this failure is caused by a break in the RFID chip 201. This is because the following possibilities have been already eliminated: a possibility of failure in communication to the RFID chip 201 due to skew of a rewritable single-cut sheet 102 (FIG. 7 (A)); and a possibility of failure in communication to the RFID chip 201 due to the setting of a rewritable single-cut sheet 102 in a wrong orientation (FIG. 7(B), FIG. 7(C)). For this reason, a rewritable single-cut sheet 102 having a broken RFID chip 201 can be identified.

When communication to an RFID chip 201 succeeds, this RFID chip 201 is subjected to printing by the printing unit 110 (Refer to FIG. 3). The RFID single-cut sheet printer 101 issues the rewritable single-cut sheet 102 having the RFID chip 201 the communication to which succeeded as a printed single-cut sheet from the media delivery port 105a (Refer to FIG. 1 and FIG. 3). Meanwhile, if communication to an RFID chip 201 fails, the reject gate 114 (Refer to FIG. 3) is displaced and this RFID chip 201 drops from the guide path 113 onto the slope 116 (Refer to FIG. 3). The RFID chip is collected in the reject collection unit 107 (Refer to FIG. 3). A user can recognize that the rewritable single-cut sheets 102 collected in the reject collection unit 107 are rewritable single-cut sheets 102 having a broken RFID chip 201. Consequently, the user can open the reject collection unit cover 106 (Refer to FIG. 3) and take out and discard the rewritable single-cut sheets 102 collected in the reject collection unit 107.

As mentioned above, the RFID single-cut sheet printer 101 in this embodiment makes it possible to identify any rewritable single-cut sheet 102 having a broken RFID chip 201. The RFID single-cut sheet printer 101 in this embodiment has the stopper 129. If a first operation of writing data to an RFID chip 201 fails, the rewritable single-cut sheet 102 is conveyed and an attempt is made again to write the data. Therefore, it is possible to more reliably write data to sound (unbroken) RFID chips 201 than conventional.

Description will be given to another embodiment. The same elements as in the above-mentioned embodiment will be marked with the same reference numerals and the description thereof will be omitted. In sheet size input processing (Refer to FIG. 5) in this embodiment, not only the length L cf the short sides of a rewritable single-cut sheet 102 is accepted as sheet size information, but input of the distance (as which L2 will be taken) between the second long side 203 and the RFID chip 201 in a rewritable single-cut sheet 102 in the direction of short sides is also accepted. During the processing of ACT106 and ACT107 in print processing (Refer to FIG. 6) in this embodiment, the microcomputer 301 performs the following operation: it controls the stepping motor 307 to rotate the driving roller 122 so that the rewritable single-cut sheet 102 that was stopped by the drooping portion 133 and whose skew was corrected is conveyed by a distance of |L2 - L1|. As a result, the RFID single-cut sheet printer 101 in this embodiment makes it possible to accommodate various types of rewritable single-cut sheets 102 regardless of the following: the sheet size of the rewritable single-cut sheets 102 or the distance between the second long side 203 and the RFID chip 201 in each rewritable single-cut sheet 102 in the direction of short sides. Thus the RFID single-cut sheet printer makes it possible to identify any RFID holding medium having a broken RFID chip.

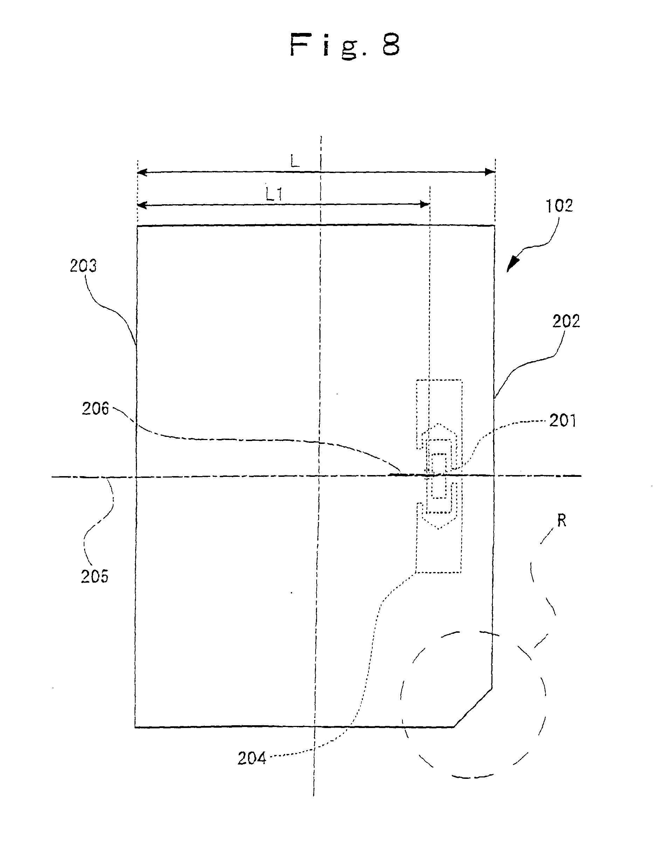

Description will be given to another embodiment with reference to FIG. 8 to FIG. 10. The same elements as in the above-mentioned embodiments will be marked with the same reference numerals and the description thereof will be omitted.

FIG. 8 is a plan view of a rewritable single-cut sheet 102. In the rewritable single-cut sheet 102 in this embodiment, an RFID chip 201 is buried close to the first long side 202 of the rewritable single-cut sheet 102. For this reason, in the rewritable single-cut sheet 102 in this embodiment, the distance of L1 between the second long side 203, or the end of the sheet positioned on the downstream side of the guide path 113, and the RFID chip 201 is larger than half of the length of the RFID chip 201 in the direction of short sides. That is, the distance of L1 > L/2.

The RFID chip 201 is connected to the metal plate 204. The metal plate 204 is in the shape of a long and thin rectangle. The shape of the metal plate 204 is symmetric with respect to the imaginary center line 206 of the metal plate 204 extended in the direction of its short sides. The RFID chip 201 is positioned on the imaginary center line 206 of the metal plate 204 and connected to the metal plate 204. The metal plate 204 is so oriented that its long sides are parallel with the long sides of the RFID chip 201. The imaginary center line 206 of the metal plate 204 is matched with the imaginary center line 205 of the rewritable single-cut sheet 102. The RFID chip 201 is started by electromotive force arising from radio waves outputted from the antenna 126 (Refer to FIG. 3) of the RFID reader-writer 111 and received by the metal plate 204. That is, the metal plate 204 functions as an antenna in RFID communication.

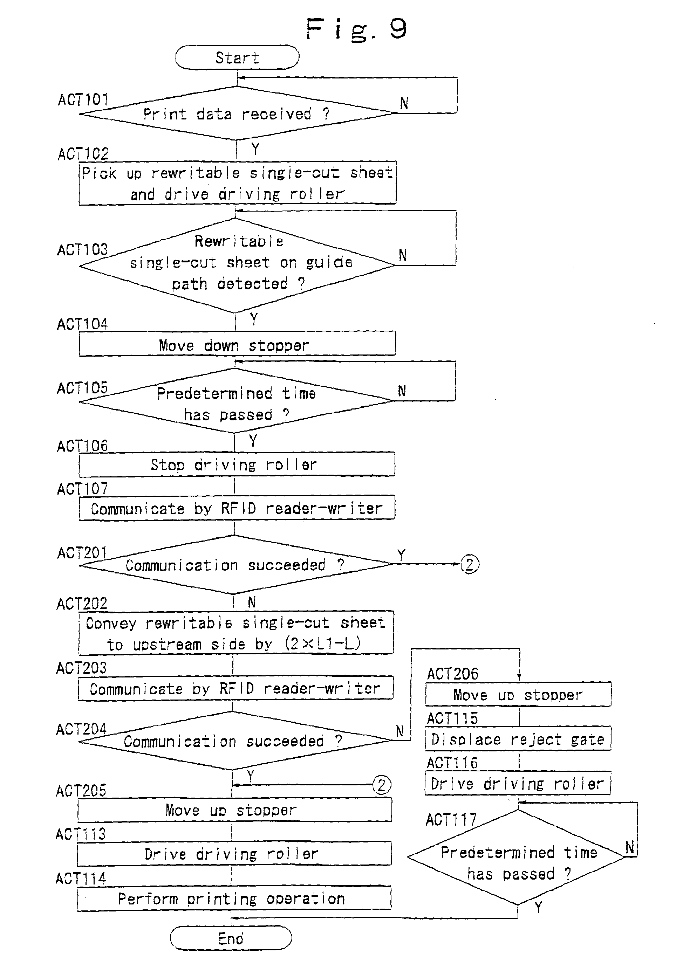

FIG. 9 is a flowchart illustrating the flow of print processing carried out in the RFID single-cut sheet printer 101. The print processing carried out in the RFID single-cut sheet printer 101 in this embodiment is different from the above-mentioned embodiments in the processing after first communication (Refer to ACT107 in FIG. 6) with the RFID reader-writer 111.

Following ACT107 in the print processing, the microcomputer 301 determines whether or not the communication conducted at ACT107 has succeeded (ACT201). When it is determined that the communication has succeeded (Y at ACT201), the microcomputer 301 causes the flow of processing to proceed to ACT205 (described later). When it is determined that the communication has not succeeded (N at ACT201), the microcomputer 301 does not move up the stopper 129 in this embodiment. Instead, it conveys the rewritable single-cut sheet 102 to the upstream side of the guide path 113 by a distance of (2 × L1 - L) (ACT202). Then it controls the RFID reader-writer control circuit 310 again to output radio waves from the antenna 126 (ACT203).

Subsequently, the microcomputer 301 determines whether or not the communication conducted at ACT203 has succeeded (ACT204). When it is determined that the communication succeeded at ACT203 (Y at ACT204), the microcomputer controls the cam motor 309 to move the cam 134 and move up the stopper 129 (ACT205). Thereafter, it drives the driving roller 122 (ACT113) and performs print operation (Step 114) and terminates this series of processing. The processing of ACT205 and the following ACT is also carried out when it is determined at ACT201 that the communication has succeeded (Y at ACT201).

When it is determined at Step 204 that the communication has not succeeded (N at ACT204), the microcomputer 301 controls the cam motor 309 to move the cam 134 and move up the stopper 129 (ACT205). Subsequently, it displaces the reject gate 114 (ACT115), continuously drives the driving roller 122 for a predetermined time (ACT116, ACT117), and then terminates this series of processing.

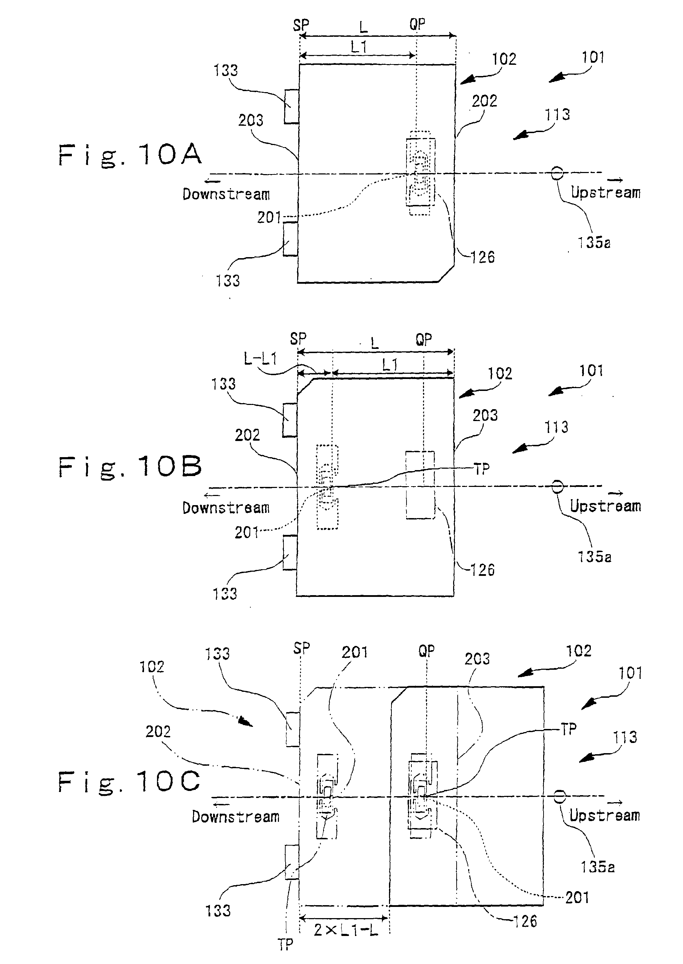

FIGS. 10(A) to 10 (C) are explanatory drawings illustrating the movement of a rewritable single-cut sheet 102 on the guide path 113. In the RFID single-cut sheet printer 101 in this embodiment, the following operation is performed as in the above-mentioned embodiments: skew of the rewritable single-cut sheet 102 is corrected by the drooping portion 133 provided in the stopper 129; and the RFID chip 201 is placed in the communication position QP where it can receive radio waves from the antenna 126 and communication by the RFID reader-writer 111 is conducted (FIG. 10(A)). Therefore, an error in communication to the RFID chip due to skew of the rewritable single-cut sheet 102 does not occur.

Consideration will be given to a case where the following takes place in the RFID single-cut sheet printer 101 in this embodiment: a rewritable single-cut sheet 102 is set in the media feed unit 105 with its second long side 203 facing upstream and its first long side 202 facing downstream (FIG. 10(B)). In this case, the RFID single-cut sheet printer 101 in this embodiment does not move up the stopper 12. Instead, it conveys the rewritable single-cut sheet 102 to the upstream side by a distance of (2 × L1 - L) and locates the chip candidate position TP in the rewritable single-cut sheet 102 in the communication position QP (FIG. 10(C)). As the result of this conveying operation, the RFID reader-writer 111 locates the RFID chip 201 buried in the rewritable single-cut sheet 102 in the communication position QP in the guide path 113 and communication by the RFID reader-writer 111 is conducted again. For this reason, the following does not occur in the RFID single-cut sheet printer 101 in this embodiment: an error in communication to the RFID chip 201 due to a rewritable single-cut sheet 102 being replenished in an erroneous orientation to the media feed unit 105.

Also in the RFID single-cut sheet printer 101 in this embodiment, a rewritable single-cut sheet 102 having an RFID chip 201 the communication to which succeeded is issued as a printed single-cut sheet from the media delivery port 105a (Refer to FIG. 1 and FIG. 3) after printing operation. A rewritable single-cut sheet 102 having an RFID chip 201 the communication to which failed is collected in the reject collection unit 107 (Refer to FIG. 3).

As mentioned above, the following possibility is eliminated also in the RFID single-cut sheet printer 101 in this embodiment as in the above-mentioned embodiments: a possibility of failure in communication to the RFID chip 201 due to skew of a rewritable single-cut sheet 102 or the setting of a rewritable single-cut sheet 102 in a wrong orientation. For this reason, a rewritable single-cut sheet 102 having a broken RFID chip 201 can be identified. In addition, the RFID single-cut sheet printer 101 in this embodiment conveys a rewritable single-cut sheet 102 to the upstream side of the guide path 113 with the drooping portion 133 positioned downward. This prevents the drooping portion 133 from being vertically displaced to displace the rewritable single-cut sheet 102. In the RFID single-cut sheet printer 101 in this embodiment, the following procedure may be taken in the print processing (Refer to FIG. 9) as in the above-mentioned embodiments as a matter of course: after the first communication by the RFID reader-writer 111, the stopper 129 is moved up and then the rewritable single-cut sheet 102 is conveyed.

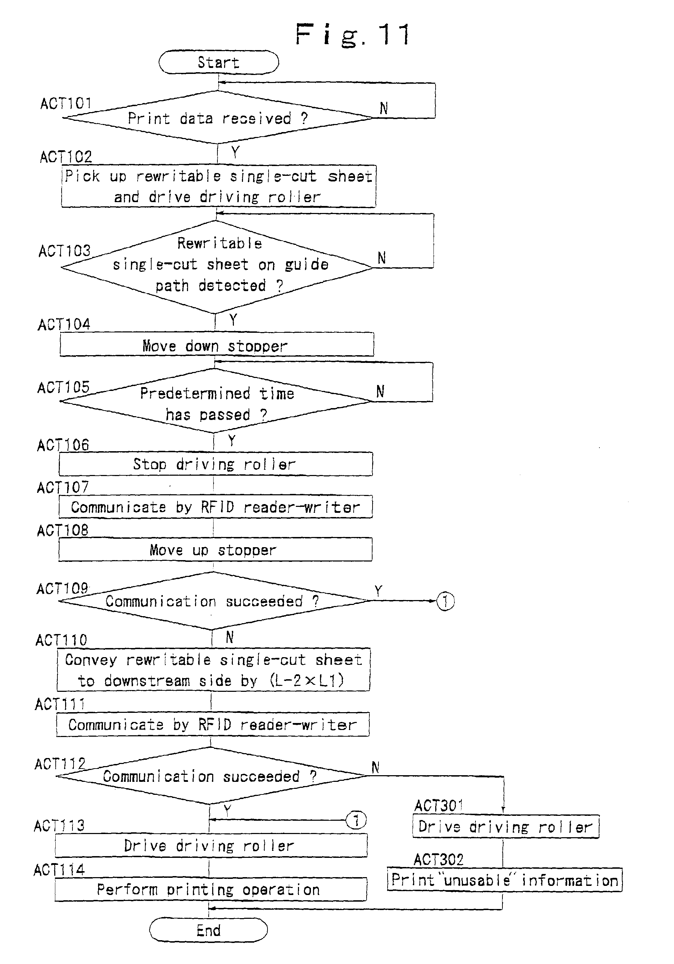

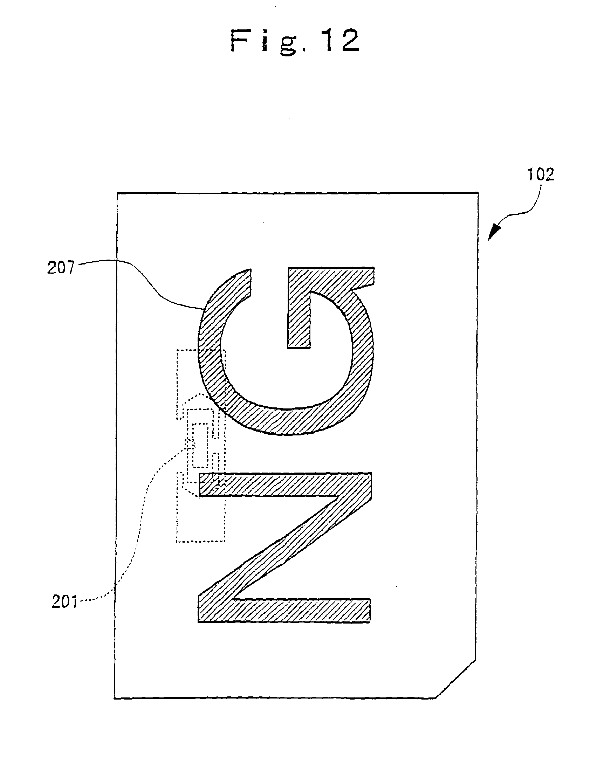

Description will be given to another embodiment with reference to FIG. 11 and FIG. 12. The same elements as in the above-mentioned embodiments will be marked with the same reference numerals and the description thereof will be omitted.

The RFID single-cut sheet printer 101 in this embodiment does not have the following: the reject collection unit cover 106 (Refer to FIG. 1 and FIG. 3), reject collection unit 107 (Refer to FIG. 3), slope 116 (Refer to FIG. 3), reject gate 114 (Refer to FIG. 3 and FIG. 4), or gate solenoid 309a (Refer to FIG. 4). That is, the RFID single-cut sheet printer 101 in this embodiment does not have a reject path running from the guide path 113 to the reject collection unit 107. If second communication to the RFID chip 201 by the RFID reader-writer 111 in the print processing in this embodiment, the microcomputer 301 carries out the following processing in place of the processing of ACT115 to ACT117 illustrated in FIG. 6 and FIG. 9: it controls the stepping motor 307 to drive the driving roller 122 and convey the rewritable single-cut sheet 102 to the downstream side of the guide path 113 (ACT301). Following ACT301, the microcomputer 301 controls the thermal head 127 of the printing unit 110 to print information 207 (Refer to FIG. 12) indicating "unusable" on the rewritable single-cut sheet 102 conveyed to the downstream side. Then it issues this rewritable single-cut sheet 102 from the media delivery port 105a (ACT302).

FIG. 12 is a schematic diagram illustrating an example of printout contents printed on a rewritable single-cut sheet 102 having a broken RFID chip 201. In the RFID single-cut sheet printer 101 in this embodiment, unusable information 207 indicating "unusable" is printed on the following rewritable single-cut sheet: a rewritable single-cut sheet 102 having an RFID chip 201 determined to be broken as the result of an attempt to communicate by the RFID reader-writer 111 through the above-mentioned processing. The unusable information 207 is a marking for discrimination. A user of the RFID single-cut sheet printer 101 can easily discriminate a rewritable single-cut sheet 102 having a broken RFID chip 201 and a rewritable single-cut sheet 102 having an unbroken, sound RFID chip 201 from each other by this marking. The unusable information 207 in the example illustrated in FIG. 12 is characters of "NG" printed over the entire surface of a rewritable single-cut sheet 102 with the RFID chip 201 in the center.

A user can easily find any rewritable single-cut sheet 102 with the unusable information 207 printed thereon among rewritable single-cut sheets 102 issued from the media delivery port 105a of the RFID single-cut sheet printer 101 in this embodiment. Therefore, any rewritable single-cut sheet 102 having a broken RFID chip 201 can be identified. In addition, the RFID single-cut sheet printer 101 in this embodiment is not equipped with the reject collection unit 107 or the like, Therefore, the RFID single-cut sheet printer 101 can be reduced in size.

Aside from each above-mentioned embodiment, the following measure may be taken in the sheet size input processing as described in relation to the above embodiments: input of the length L of the short sides of each rewritable single-cut sheet 102 and the distance (as which L2 will be taken) between the second long side 203 and the RFID chip 201 in the rewritable single-cut sheet 102 is accepted as sheet size information; the inputted L2 and L/2 are compared with each other; and after failure in the first communication by the RFID reader-writer 111, the direction in which the rewritable single-cut sheet 102 is conveyed is changed. More specific description will be given. When the microcomputer 301 determines that L2 < L/2, the following processing is carried out as described in relation to above-mentioned embodiments: after failure in the first communication by the RFID reader-writer 111, the rewritable single-cut sheet 102 is conveyed to the downstream side of the guide path 113. When the microcomputer 301 determines that L2 > L/2, the following processing is carried out as described in relation to above-mentioned embodiments: after failure in the first communication by the RFID reader-writer 111, the rewritable single-cut sheet 102 is conveyed to the upstream side of the guide path 113. This makes it possible to identify any rewritable single-cut sheet 102 having a broken RFID chip regardless of the type of rewritable single-cut sheets 102 set in the media feed unit 105.

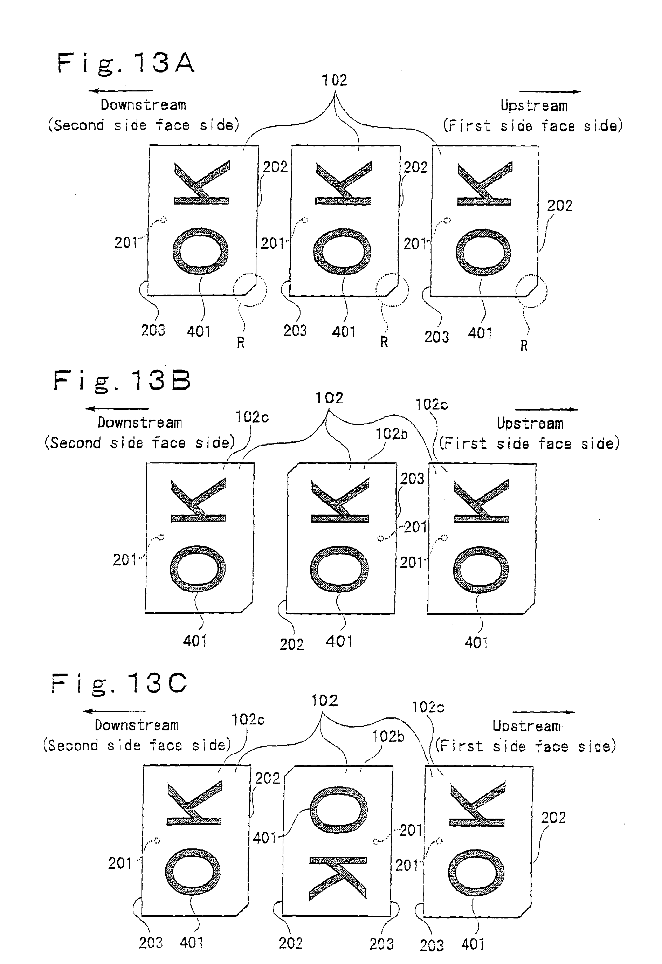

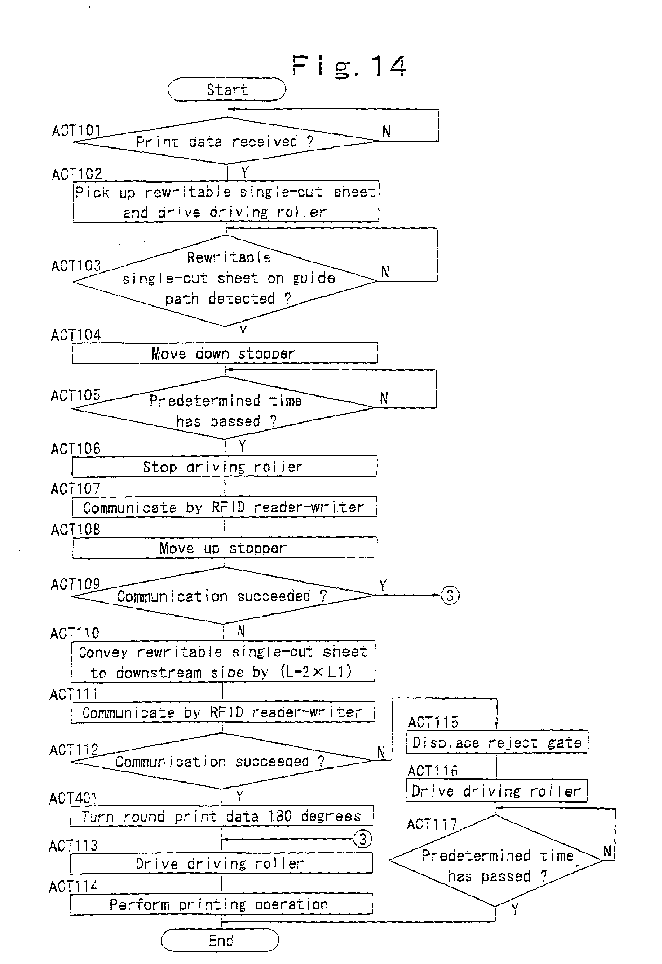

Description will be given to another embodiment with reference to FIGS. 13(A) to 13(C) and FIG. 14. The same elements as in the above-mentioned embodiments will be marked with the same reference numerals and the description thereof will be omitted.

FIGS. 13(A) to 13(C) are explanatory drawings illustrating the general outline of the RFID single-cut sheet printer 101 in this embodiment. When a rewritable single-cut sheet 102 is set in the media feed unit 105 (Refer to FIG. 3), it is oriented so that the following is implemented: its second long side 203 faces to the downstream side (second side face 103b side) of the guide path 113 of the RFID single-cut sheet printer 101 and its first long side 202 faces to the upstream side (first side face 103a side) of the guide path 113. Each rewritable singie-cut sheet 102 is provided on the first long side 202 side with a chamfered corner area R.

Consideration will be given to a case where the following is implemented: all the rewritable single-cut sheets 102 are set in the media feed unit 105 in this orientation; and print data for printing characters of "OK" with the second long side 203 taken as top and the first long side 202 taken as bottom is inputted to the RFID single-cut sheet printer 101 (FIG. 13(A)). In every rewritable single-cut sheet 102 printed and issued from the RFID single-cut sheet printer 101, in this case, the chamfered corner area R comes to the lower left of the characters 401 of "OK." A user watches the orientation of the printed characters 401 or the position of the chamfered corner area R to grasp the orientation of the issued rewritable single-cut sheet 102. He/she attaches it to a sign, a wall, a whiteboard, or the like based on this orientation when using it.

Consideration will be given to the following case: a case where one (marked with reference numeral "102b") of rewritable single-cut sheets 102 set in the media feed unit 105 is so set that it is turned 180 degrees from it proper orientation. That is, the rewritable single-cut sheet is set with the position of its second long side 203 and the position of its first long side 202 switched with each other (FIG. 13(B)). In this case, the characters 401 of "OK" are printed on the rewritable single-cut sheet 102b with the first long side 202 taken as top and the second long side 203 taken as bottom and the chamfered corner area R comes to the upper right of the characters 401. That is, in this rewritable single-cut sheet 102, the characters 401 are turned upside down relative to the position of the chamfered corner area R and the position of the RFID chip 201 unlike the other rewritable single-cut sheets 102. A user may attach the printed and issued rewritable single-cut sheets 102, 102b to a sign, a wall, a whiteboard, or the like and attempt to read the RFID chips 201 in the rewritable single-cut sheets 102, 102b using a reader (not shown). At this time, the following may take place for the above-mentioned reason: since only the rewritable single-cut sheet 102b is different in the position of the RFID chip 201, the user may fail in reading. A user may recover used rewritable single-cut sheets 102, 102b and set them in the media feed unit 105 of the RFID single-cut sheet printer 101 and he/she may set the rewritable single-cut sheet 102b in a wrong orientation again. If this is repeated, data must be written to the RFID chip 201 in the rewritable single-cut sheet 102b each time and this degrades the efficiency of printing and issuing single-cut sheets.

The RFID single-cut sheet printer 101 in this embodiment takes the following measure to solve the above problem caused by a rewritable single-cut sheet 102 being set in the media feed unit 105 so that it is turned round 180 degrees: on the rewritable single-cut sheet 102b so set that it is turned round 180 degrees, print data is printed so that it is turned round 180 degrees. Thus the relation between the top and bottom of the characters 401 and the position of the chamfered corner area R and the position of the RFID chip 201 is identical with that in the other rewritable single-cut sheets 102. As a result the problem the user may encounter when he/she uses printed and issued rewritable single-cut sheets 102 is solved.

FIG. 14 is a flowchart illustrating the flow of print processing carried out in the RFID single-cut sheet printer 101. The flow of the print processing in this embodiment is based on the flow of the print processing (Refer to FIG. 6) carried out in the RFID single-cut sheet printer 101 in above-mentioned embodiments. However, it is different in that the microcomputer 301 in this embodiment carries out data conversion processing (ACT401) only when it is determined at ACT112 that the second conducted communication to the RFID chip 201 has succeeded (Y at ACT112). In this data conversion processing, print data received from the external device 51 and stored in the buffer memory 304a is processed so that its printing orientation is turned round 180 degrees. After carrying out the processing of ACT401, the microcomputer 301 rotates the driving roller 122 (ACT113) and carries out printing on the rewritable single-cut sheet 102 being conveyed (ACT114), and then terminates this series of processing.

Also when the RFID single-cut sheet printer 101 in this embodiment that carries out the above-mentioned print processing is used, the following can be implemented: the RFID single-cut sheet printer 101 in this embodiment can identify any rewritable sinale-cut sheet 102 having a broken RFID chip 201 as the RFID single-cut sheet printers 101 in the above-mentioned embodiments can. When the second data write operation succeeds, the RFID single-cut sheet printer 101 in this embodiment turns round print data 180 degrees before carrying out print operation. This will be described with reference to FIG. 13(C).

First, consideration will be given to a case where the following takes place in the RFID single-cut sheet printer 101 in this embodiment: a rewritable single-cut sheet 102 is set in the media feed unit 105 with its second long side 203 facing downstream and its first long side 202 facing upstream. In this case, the microcomputer 301 communicates with the RFID chip 201 at ACT107 of the print processing (FIG. 14). Therefore, the flow of processing proceeds to ACT113 based on the result of determination at ACT109. For this reason, the microcomputer 301 does not carry out the processing of ACT401. It does not turn round the print data in the buffer memory 304a and carries out printing at ACT113 and ACT114. As a result, the RFID single-cut sheet printer 101 prints the characters of "OK" on the rewritable single-cut sheet 102 with its second long side 203 side taken as top and its first long side 202 taken as bottom and issues the sheet from the media delivery port 105a. In FIG. 13(B) and FIG. 13(C), the thus issued rewritable single-cut sheet 102 is indicated by reference numeral "102c."

Consideration will be given to a case where a rewritable single-cut sheet 102 is set in the media feed unit 105 with its first long side 202 facing downstream and its second long side 203 facing upstream. In this case, the microcomputer 301 does not communicate with the RFID chip 201 at ACT101 of the print processing (FIG. 14); therefore, the flow of processing proceeds to ACT110 based on the result of determination at ACT109. The microcomputer 301 communicates with the RFID chip 201 at ACT111; therefore, the flow of processing proceeds to ACT401 based on the result of determination at ACT112. The print data in the buffer memory 304a is turned round 180 degrees and printing is carried out at ACT113 and ACT114. As a result, the RFID single-cut sheet printer 101 prints the characters of "OK" on the rewritable single-cut sheet 102 as indicated by reference numeral "102b" in FIG. 13 (C). That is, it prints the characters on the sheet with its second long side 203 side taken as top and its first long side 202 side taken as bottom and issues this sheet from the media delivery port 105a.

As mentioned above, the following can be implemented even when a rewritable single-cut sheet 102 is turned round 180 degrees and set in the media feed unit 105 of the RFID single-cut sheet printer 101 in this embodiment: in the rewritable single-cut sheet 102 printed and issued from this RFID single-cut sheet printer 101, the following relation is identical with that in the other rewritable single-cut sheets: the relation between the top and bottom of the characters 401 and the position of the chamfered corner area R and the position of the RFID chip 201. As a result, a user can easily find any rewritable single-cut sheet 102b set in the media feed unit 105 in a wrong orientation among the printed and issued rewritable single-cut sheets 102 (102c, 102b). He/she can correct the orientation of this rewritable single-cut sheet 102b when he/she attaches it to a sign, a wall, a whiteboard, or the like and uses it. As a result, the user will not fail in reading the RFID chip 201 in each rewritable single-cut sheet 102 (102c, 102b) with a reader (not shown). When a user recovers used rewritable single-cut sheets 102, 102b and sets them in the media feed unit 105 of the RFID single-cut sheet printer 101 again, he/she will not mistake the orientation of the rewritable single-cut sheet 102b. This can prevent degradation in the efficiency of printing and issuing single-cut sheets.

In the above description, the flow of the print processing (FIG. 14) in this embodiment is based on the flow of print processing carried out in the RFID single-cut sheet printer 101 in above-mentioned embodiments in FIG. 6. Needless to add, the processing (ACT401) in which print data is turned round 180 degrees and printing is carried out only when the second data write operation succeeds (Y at ACT112) can be applied to other above-mentioned embodiments.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. An RFID holding medium issuing device, **characterized in that** comprising:
a guide path (113) for guiding an RFID holding medium (102) having an RFID chip (201) shifted from the center to the upstream and downstream direction (W) of conveyance;
a conveyance unit (121) for conveying the RFID holding medium in the guide path;
an RFID reader-writer (111) conducting radio communication to an RFID chip placed in a predetermined communication position (QP) in the guide path; and
a control unit (301) for carrying out first processing to try communication by the RFID reader-writer in a position where the RFID chip of the RFID holding medium whose front end is set in the desired direction is located in the communication position, and, if communication in the first processing fails, for carrying out second processing to place the RFID holding medium in a position where the RFID chip of the RFID holding medium whose front end is oppositely set to the desired direction is located in the communication position and try communication by the RFID reader-writer.

2. The RFID holding medium issuing device of claim 1, further comprising:
a stopper (129) against which the side facing downstream, of an RFID holding medium conveyed by the conveyance unit is abutted and which places the RFID chip of the RFID holding medium whose front end is set in the desired direction in the communication position; and
a stopper driving source (309) for moving the stopper,
wherein in the first processing, the control unit controls the stopper driving source to stop the RFID holding medium.

3. The RFID holding medium issuing device of claim 2,
wherein in the second processing, the control unit controls the stopper driving source to locate the stopper in a position where the RFID holding medium conveyed along the guide path does not interfere therewith and then controls a driving source for the conveyance unit to convey this RFID holding medium to the downstream side and locate the chip candidate position (TP) in the communication position.

4. The RFID holding medium issuing device of claim 1,
wherein in the second processing, the control unit controls a driving source for the conveyance unit to convey the RFID holding medium to the downstream side and locate the chip candidate position in the communication position.

5. The RFID holding medium issuing device of claim 1,
wherein in the second processing, the control unit controls a driving source for the conveyance unit to convey the RAID holding medium to the upstream side and locate the chip candidate position in the communication position.

6. The RFID holding medium issuing device of claim 1, further comprising:
a switching unit (114) switching the conveying direction of an RFID holding medium conveyed along the guide path to a reject path (116) branched from a position of bifurcation on the guide path,
wherein if communication in the second processing fails, the control unit controls a driving source for the switching unit and a driving source for the conveyance unit to progress the RFID holding medium having the RFID chip with which the RFID reader-writer tried to communicate to the reject path.

7. The RFID holding medium issuing device of claim 1, further comprising;
a printing unit (110) carrying out printing on an RFID holding medium conveyed on the guide path,
wherein if communication in the second processing fails, the control unit controls driving sources for the printing unit and the conveyance unit to print a marking indicating "unusable" on the RFID holding medium having the RFID chip with which the RFID rea der-writer tried to communicate.

8. The RFID holding medium issuing device of claim 1, further comprising:
a printing unit carrying out printing on an RFID holding medium conveyed on the guide path,
wherein the control unit carries out processing to control driving sources for the printing unit and the conveyance unit and carry out printing, based on print data, on the RFID holding medium having the RFID chip with which the RFID reader-writer tried to communicate when communication in the first processing succeeds, and processing to turn round the print data 180 degrees, control driving sources for the printing unit and the conveyance unit, and carry out printing, based on the print data turned round, on the RFID holding medium having the RFID chip with which the RFID reader-writer tried to communicate when communication in the second processing succeeds.

9. The RFID holding medium issuing device of claim 6, further comprising:
a printing unit carrying out printing on an RFID holding medium conveyed on the guide path,
wherein the control unit carries out processing to control driving sources for the printing unit and the conveyance unit and carry out printing, based on print data, on the RFID holding medium having the RFID chip with which the RFID reader-writer tried to communicate when communication in the first processing succeeds, and processing to turn round the print data 180 degrees, control driving sources for the printing unit and the conveyance unit, and carry out printing, based on the print data turned round, on the RFID holding medium having the RFID chip with which the RFID reader-writer tried to communicate when communication in the second processing succeeds.

10. The RFID holding medium issuing device of claim 7, further comprising:
a printing unit carrying out printing on an RFID holding medium conveyed on the guide path,
wherein the control unit carries out processing to control driving sources for the printing unit and the conveyance unit and carry out printing, based on print data, on the RFID holding medium having the RFID chip with which the RFID reader-writer tried to communicate when communication in the first processing succeeds, and processing to turn round the print data 180 degrees, control driving sources for the printing unit and the conveyance unit, and carry out printing, based on the print data turned round, on the RFID holding medium having the RFID chip with which the RFID reader-writer tried to communicate when communication in the second processing succeeds.

11. An RFID holding medium issuing method, **characterized in that** comprising:
conveying an PFID holding medium (102) having an RFID chip (201) in a position shifted from the center to the upstream and downstream direction (W) of conveyance along a guide path (113) for guiding the RFID holding medium;
trying first communication by the RFID reader-writer (111) in a position where the RFID chip of the RFID holding medium whose front end is set in the desired direction is located in the communication position (QP); and
placing the RFID holding medium, if communication in the first processing fails, in a position where the RFID chip of the RFID holding medium whose front end is oppositely set to the desired direction is located in the communication position and trying second communication by the RFID reader-writer.

12. The RFID holding medium issuing method of claim 11, further comprising the steps of:
when the first communication succeeds, controlling a driving source for a printing unit for carrying out printing on the RFID holding medium conveyed on the guide path and a driving source for the conveyance unit, and carrying out printing, based on print data, on the RFID holding medium having the RFID chip with which the RFID reader-writer tried to communicate; and
when the second communication succeeds, turning round the print data 180 degrees, controlling driving sources for the printing unit and the conveyance unit, and carrying out printing, based on the print data turned round, on the RFID holding medium having the RFID chip with which the RFID reader-writer tried to communicate.

13. A computer-readable medium having computer programs stored thereon that, when executed by a computer having a display unit configured to display information and an input unit configured to input a number and an operator, causes the computer to:
control a conveyance unit (121) for conveying an RFID holding medium (102) so that the RFID holding medium having an RFID chip (201) in a position shifted from the center to the upstream and downstream direction (W) of conveyance is conveyed along a guide path (113) for guiding the RFID holding medium;
try first communication by the RFID reader-writer (111) in a position where the RFID chip of the RFID holding medium whose front end is set in the desired direction is located in the communication position (QP); and
place the RFID holding medium, when communication in the first processing fails, in a position where the RFID chip of the RFID holding medium whose front end is oppositely set to the desired direction is located in the communication position and try second communication by the RFID reader-writer.

14. The computer-readable medium of claim 13,
wherein the computer programs further cause the computer to:
control, when the first communication succeeds, a driving source for a printing unit for carrying out printing on the RFID holding medium conveyed on the guide path and a driving source for the conveyance unit, and carry out printing, based on print data, on the RFID holding medium having the RFID chip with which the RFID reader-writer tried to communicate; and
turn round, when the second communication succeeds, the print data 180 degrees, control driving sources for the printing unit and the conveyance unit, and carry out printing, based on the print data turned round, on the RFID holding medium having the RFID chip with which the RFID reader-writer tried to communicate.
